# EUROPEAN PATENT APPLICATION

(11) **EP 1 429 172 A1**
(43) Date of publication of application: **16.06.2004**
(21) Application number: 03028261.0
(22) Date of filing: 10.12.2003
(51) Int. Cl.: G02C 7/02

(54) **Progressive addition power lens**

(30) Priority: 12.12.2002 JP 2002360987
(71) Applicant: SEIKO EPSON CORPORATION, Shinjuku-ku, Tokyo 163-0811 (JP)
(72) Inventor: Shinohara, Toshihide, Seiko Epson Corp., Suwa-shi Nagano-ken 392-8502 (JP); Kaga, Tadashi, Seiko Epson Corp., Suwa-shi Nagano-ken 392-8502 (JP)
(74) Representative: Hoffmann, Eckart, Dipl.-Ing.

(57) **Abstract**

A progressive lens is provided, wherein the length of the intermediate corridor is in the range of 22 to 28 mm, and a clear visual region, which is defined as a region where astigmatism is 0.5 dioptres or less, has a maximum horizontal width in the far portion, which is twice or less its minimum horizontal width in the intermediate corridor. Preferably, the clear visual region has a horizontal width of 30 mm or more in the near portion. Also preferably, a position, where astigmatism distributed at the sides of the lens has the maximum value, is located in an almost horizontal direction with a far point positioned above the intermediate corridor or is located above the far point.

## Description

The present invention is related to a progressive addition power lens which is used for close-range work such as personal computer work, bookkeeping, reading, etc., and is mainly used for patients having poor focusing ability due to presbyopia.

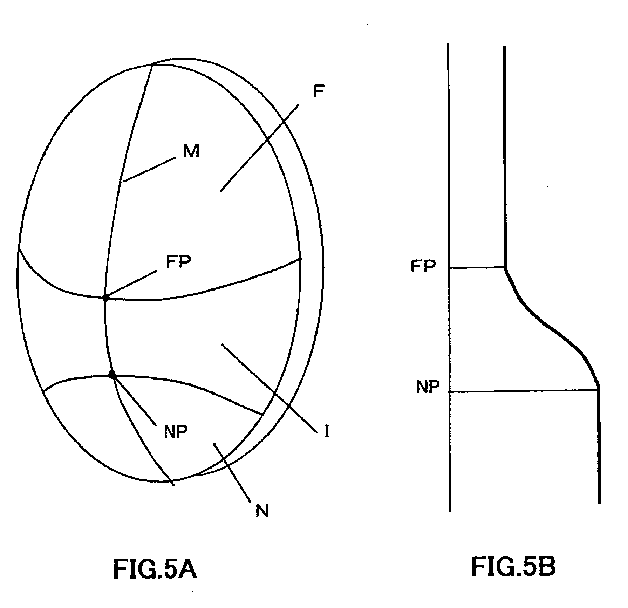

The general structure of a progressive addition power lens (simply referred to as "progressive lens" hereinafter) will be described with reference to Fig. 5. Fig. 5A shows the entire structure and Fig. 5B shows the variation in refractive power on the principal meridian curve M. The progressive lens has an aspheric surface, which is called a progressive addition power surface (hereinafter, referred to as a progressive surface), on any one of the pair of refractive surfaces that form a lens (conventionally, the eye side is called the inner surface and the opposite side thereof is called the outer surface). The progressive surface includes a far portion F having a refractive power corresponding to a distant view, a near portion N having a refractive power corresponding to a near view, and an intermediate portion I having a refractive power changing from that of the far portion to that of the near portion thereby connecting those two portions. It is difficult to clearly distinguish the borders between these portions because the progressive lens is continuous from the distant view end to the near view end and has no border; it is intentionally designed so that a wearer feels as if he/she is wearing normal correction glasses having a refractive power higher than conventional farsighted, nearsighted glasses, etc.

On the other hand, the refractive power along the principal meridian curve M is provided on the progressive surface on the assumption that the movement of the wearer's eyes ranges from the distant view to the near view. The lens is designed so that the wearer can move his or her eyes from a distant point in front to the very front (close range) along the principal meridian curve M and see the respective objects at each distance. Generally, the principal meridian curve M is designed to be almost perpendicular to the lens wearing state and to be angled to the nose in consideration of eye movement around the near portion N. As shown in Fig. 5B, on the principal meridian curve, the refractive power is set to be uniform in the far portion F, gradually to increase in the intermediate portion I, and to be almost uniform in the near portion N again. In general, the border between the far portion F and the intermediate portion I of the principal meridian curve M, i.e., the point FP in which refractive power starts to increase, is called far point, and the border between the near portion N and the intermediate portion I, i.e., the point NP in which refractive power is substantially constant again, is called near point. Desired refractive power variation is generated in the section which ranges from the far point to the near point, and thus this section is called an intermediate corridor.

Typically, the other surface of the progressive lens, which is not a progressive surface, is formed so as to have a spherical surface or an aspheric surface for correcting astigmatism in order to provide the wearer with prescription dioptric power in cooperation with the progressive surface.

The far portion F of the progressive surface has a constant curvature radius suitable for providing distance dioptric power, and the near portion N has an almost constant curvature radius suitable for providing near dioptric power, which is different from that of the far portion. The intermediate portion I, which smoothly connects the two portions having different curvature radii, has an inevitably complex aspheric surface, which causes the resulting unique optical characteristics of the progressive lens. That is, because astigmatism occurs on the sides of the intermediate portion I, vision through the sides is blurred. Furthermore, a distortion aberration is generated, and an object is seen to be declined and distorted when moving the head. In general, a region where the level of astigmatism is not more than 0.5 D (D=dioptres) is called a clear visual region, and it is difficult to feel blur in the region. Thus, objects in designing a progressive lens are to minimize the inevitable astigmatism and to optimize the distribution of the astigmatism in use. The same applies to the distortion aberration.

However, there are various types of progressive lens. Originally, the progressive lens had a far portion having a relatively broad region and a near portion having a narrower region than the far portion, and the length of the intermediate corridor was ten and several millimeters, i.e., this lens had a far-and-near type design. In this type, there was a disadvantage in that the clear visual region in the intermediate portion inevitably became narrow. As a result, in some cases, the dioptric power of the far portion is prescribed to conform to an intermediate length in order to make an intermediate distance appear clear, but because most of the distant view is completely sacrificed, it is impossible to obtain satisfactory vision.

Thereafter, as in JP-B-6-90368 (p.4 to 5, Fig. 1), a so-called intermediate-and-near type or near-and-intermediate type was proposed in which the length of the intermediate corridor was set to be in the range of 20 to 25 mm and the clear visual region of the intermediate portion was broadened. In this type, although it was difficult to use the far portion, it was designed to ensure that the far portion be a minimum and the visual sensation from intermediate to near distances was regarded as being important. In JP-A-9-49991 (p.4 to 5, Fig. 1), a progressive addition power band which is limited to be within 18 mm was proposed.

Thereafter, as disclosed in JP-A-2-248920 (p.10 to 11, Fig. 13), JP-A-9-251143 (p.4 to 5, Fig. 1), JP-A-10-123467 (p.3 to 8, Fig. 11), JP-A-10-123468 (p.3 to 6, Fig. 5) and JP-A-10-123469 (p.3 to 8, Fig. 11), a progressive lens was devised in which further priority was given to the near view. In general, this type is called a near-and-near type, and the basic structure thereof includes a far portion, an intermediate portion, and a near portion. However, it is designed based on the idea that the prescription is based on the near dioptric power of the wearer and the dioptric power is gradually decreased to the far point. Furthermore, in the region corresponding to the far portion, the wearer can see only the range from tens of centimeters to one or two meters because the dioptric power does not reach his/her distant dioptric power. But, because a clear visual region of the near point is set to be broad, the near-and-near type can be more conveniently used than the far-and-near type or the intermediate-and-near type described above if only close-range work is considered.

When such intermediate-and-near type and near-and-near type progressive lenses are fitted in a frame of glasses, the eye point, which is the position through which the eyes view through the lens in the case of the horizontal front view, is set in the intermediate corridor of the intermediate portion. Compared with the eye point of the conventional far-and-near type progressive lens, which is set to the far point or set to 2 to 4 mm upward from the far point, there is a large difference. In an intermediate-and-near type and a near-and-near type lens, the eye point is set in the intermediate corridor, such that distant objects can be seen when the eye is opened upward and the focal point is set to be near when looking down.

The present invention is related to such a near-and-near type progressive lens in which the optical characteristics are improved.

A near-and-near type progressive lens is also disclosed in the above-mentioned document JP-A-JP-A-2-248920. Its disclosure is not particularly limited to the near-and-near type, and embodiments of the near-and-near type are shown in Fig. 13 of that document. The far portion and the near portion are set to be extremely small, the dioptric power of the region between them changes gradually, and astigmatism is distributed. In the particular embodiments, the distance between the far point and the near point (length of an intermediate corridor) is 43.03 mm, i.e., the far point and the near point are far apart from each other. In the aberration distribution (shown in Fig. 13B of the document), preferably, the clear visual region of a portion close to a near dioptric power is broader and the maximum peak of astigmatism on the sides of a space between the far point and the near point is less than the addition power (2 D). However, since the intermediate corridor is so long in order to obtain a desired near dioptric power, the lens is impossible to use due to rotation of the eyes (it is necessary to rotate the eyes greatly). Furthermore, in terms of the size of a frame of glasses currently used, it is impractical for the frame to be filled with only an intermediate portion.

In a progressive lens of the above-mentioned document JP-A-9-251143 (embodiment shown in Fig. 1 of the document), a clear visual region of the near portion is set to be very broad. Furthermore, it is stated that the length of the progressive lens is suitably in the range of 15 to 19 mm. Furthermore, in this document, the far portion, which is a specific view distance correction region, is also set to be very broad. According to this embodiment, the clear visual region of the intermediate portion has a shape having a narrow width, of which the center is a concave portion, and the visual field is limited when an object such as a personal computer is viewed at a distance of tens of centimeters to one meter, and thus it is difficult to use. Because astigmatism and distortion aberration are concentrated on the sides of the intermediate portion having a large size in a frame of glasses, there is a problem of blurring at the sides and large distortion.

Progressive lenses described in the above-mentioned documents JP-A-10-123467, JP-A-10-123468 and JP-A-1 0-123469 are shown in Figs. 11, Fig. 5, and Fig. 11 of these documents as embodiments, respectively. They all have almost equal astigmatism distribution, and it can be commonly said for all that a clear visual region, which is called a specific view distance correction region in these documents, is set to be very broad, astigmatism is distributed from the intermediate portion to a side direction of the near portion, and the maximum astigmatism peak is positioned on the sides of the near portion. In this case, because the clear visual region of the intermediate portion is very narrow and astigmatism greater than the addition power (1.5 D) occurs at the side direction thereof, the visual field is limited when an object such as a personal computer is viewed at a distance of tens of centimeters to one meter, and thus it is difficult to use. Furthermore, the astigmatism occurs in the side direction of the near portion, and thus a wearer has a limited side direction visual field and a sense of incongruity.

An object of the present invention is to provide a progressive lens which is capable of solving the problems of the conventional near-and-near type progressive lenses and which can be used comfortably for personal computer work or other desk work, and which is less incongruous.

This object is achieved by a lens as claimed in claim 1. Preferred embodiments of the invention are subject-matter of the dependent claims.

In consideration of the above-described problems, the present invention is related to a progressive lens wherein the maximum width of a clear visual region of a far portion (a specific view distance correcting portion as described in some patents), which is not important in use, is set so as to be twice or less the minimum width of the clear visual region of the intermediate portion, and at the same time, the distance of the intermediate corridor is set to be in the range of 20 to 28 mm. Preferably, the maximum width of a clear visual region of the near portion is set to 30 mm or more. Furthermore, a position, where astigmatism distributed at the sides of the lens has the maximum peak, is preferably set to be located in an almost horizontal portion of or above the far point. Moreover, when the lens is fitted in a frame of glasses, the eye point is set to be located on the principal meridian curve of the intermediate corridor at a location of 8 to 12 mm upward from the near point. As a result, it becomes possible to solve the problems described above of the conventional near-and-near type progressive lenses.

Preferred embodiments of the invention and advantages resulting therefrom will be described in detail hereinafter with reference to the accompanying drawings.
- Fig. 1: is a view showing a first embodiment of the present invention, Fig. 1A indicating the aberration distribution and Fig. 2B indicating the dioptric power variation on the principal meridian curve.
- Fig. 2: is a view showing the aberration of a second embodiment of the present invention.
- Fig. 3: is a view showing the aberration of a third embodiment of the present invention.
- Fig. 4: is a view showing an example of the conventional art, Fig. 4A indicating the aberration distribution, and Fig. 4B indicating the dioptric power variation on the principal meridian curve.
- Fig. 5: is a view showing a structure of a progressive lens, Fig. 5A indicating the structure and Fig. 5B indicating the refractive power variation on the principal meridian curve.

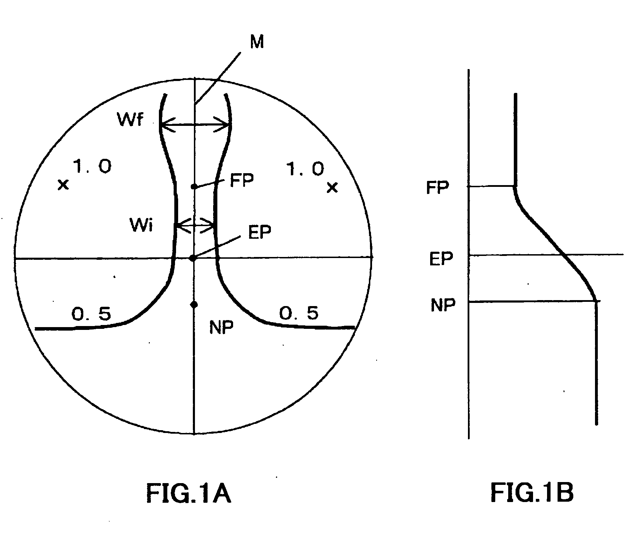

Fig. 1 is a view showing a first embodiment of the present invention; Fig. 1A shows the aberration distribution and Fig. 1B shows the dioptric power variation on the principal meridian curve M. In this embodiment, the decrease in refractive power in the range from the near point NP to the far point FP is 1.5 D. Furthermore, the length of the intermediate corridor (length of NP-FP) is 25 mm. The maximum width Wf of the clear visual region of the far portion is 14 mm, i.e., not more than twice the minimum width Wi of 7.5 mm of the clear visual region of the intermediate portion. The clear visual region of the near portion is more than 60 mm and extends to the left and right ends of the lens. The maximum astigmatism of side portions is 1.0 D, i.e., it occurs at almost horizontal sides of the far point. The eye point EP is located at the geometric center of the lens, i.e., it is located on the principal meridian curve M 10 mm upward from the near point.

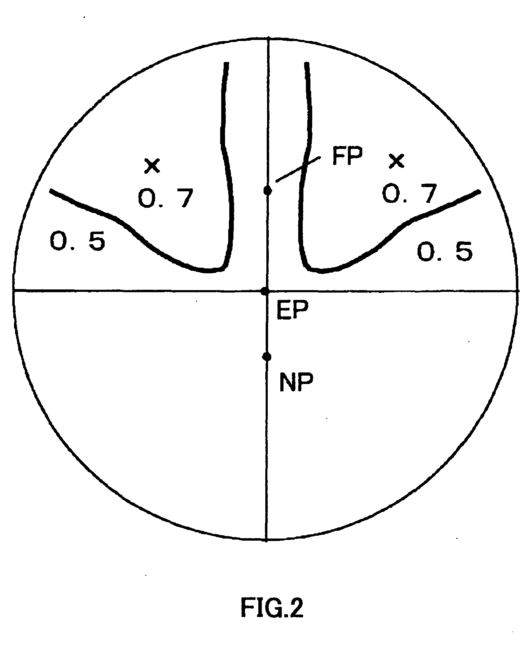

Fig. 2 is a view showing the aberration distribution of a second embodiment of the present invention. In this embodiment, the decrease in refractive power in the range from the near point NP to the far point FP is 1.0 D. Furthermore, the length of the intermediate corridor (length of NP-FP) is 25 mm. The maximum width of the clear visual region of the far portion is 14 mm, i.e., not more than 1.3 times the minimum width of 11 mm of the clear visual region of the intermediate portion. The clear visual region of the near portion is more than 75 mm and extends to the left and right ends of the lens. The maximum astigmatism of side portions is 0.7 D, i.e., it is located above horizontal sides of the far point. The eye point EP is located at the geometric center of the lens, i.e., it is located on the principal meridian curve 10 mm upward from the near point.

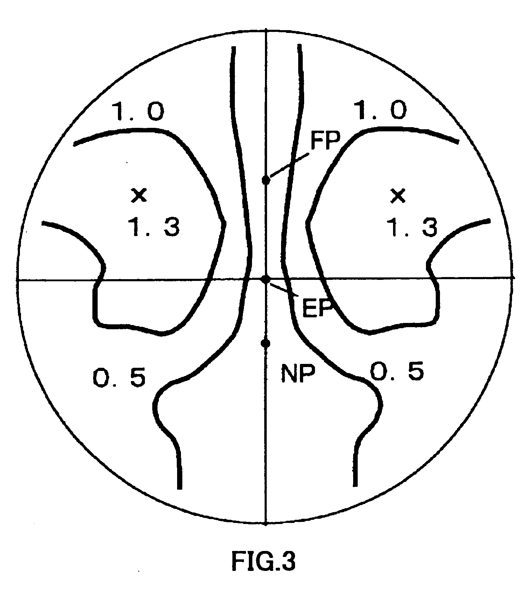

Fig. 3 is a view showing the aberration distribution of a third embodiment of the present invention. In this embodiment, the decrease in refractive power in the range from the near point NP to the far point FP is 2.0 D. Furthermore, the length of the intermediate corridor (length of NP-FP) is 25 mm. The maximum width of the clear visual region of the far portion is 14 mm, i.e., it is not more than 1.3 times the minimum width of 11 mm of the clear visual region of the intermediate portion. The maximum clear visual region of the near portion is 30 mm. The maximum astigmatism of side portions is 1.3 D, i.e., it is located at almost horizontal sides of the far point. The eye point EP is located at the geometric center of the lens, i.e., it is located on the principal meridian curve 10 mm upward from the near point.

The advantages of the present invention will be described in comparison with conventional near-and-near type lenses.

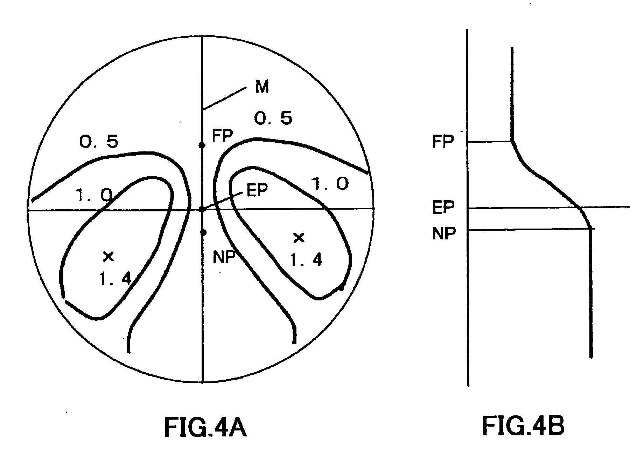

Fig. 4 is a view showing a specific example of what is disclosed in the above-mentioned patent documents JP-A-10-123467, JP-A-10-123468 and JP-A-10-123469. Fig. 4A shows the aberration distribution, and Fig. 4B shows the dioptric power variation on the principal meridian curve. In these examples of the conventional art, the decrease in refractive power in the range from the near point NP to the far point FP is 1.5 D, i.e., it is equal to that of the first embodiment of the present invention. Furthermore, the length of the intermediate corridor (length of NP-FP) is 19 mm. The maximum width of the clear visual region of the far portion is 50 mm or more, the minimum width of the clear visual region of the intermediate portion is 6 mm, and the clear visual region of the near portion is 35 mm or less. The maximum astigmatism of side portions is 1.4 D, i.e., it is located horizontally below the near point. The eye point EP is located at the geometric center of the lens, i.e., it is located on the principal meridian curve M 5 mm upward from the near point.

As is clear from comparing these examples of the conventional art with the first embodiment of the present invention, in the present invention, the length of the intermediate corridor is set sufficiently long so that the clear visual region of the intermediate portion can be broadened and the clear visual field can be broadened in the region of the eye point, thus making it easier to view, for example, the monitor of a personal computer. Furthermore, the clear visual region of the near portion is set to be very broad. On the other hand, the clear visual region of the far portion is set to be narrow and is upward from the eye point. Thus, although in a near-and-near type of a progressive lens most of the far portion is cut away when being fitted in a frame of glasses, because the main use thereof is for close-range work such as desk work, there exists no inconvenience. In accordance with the present invention, because the astigmatism of the sides is controlled to be less than that of the conventional art and the point having the maximum astigmatism is located at almost horizontal sides of the far portion, there exists no inconvenience in the desk work in which the down view is mainly used when keyboard or documents are read from the front view of personal computer monitor, etc. Furthermore, the eye point is conventionally located in about 5 mm upward from the near point. Thus, when the very side documents and the screen are looked at in turn, because the eye point to be used for looking at a screen is very close to the near point to be used for current work, the neck has to be moved up and down for adjustment. However, according to the present invention, the position of the eye point is naturally set to be about 10 mm above the near point, it is possible to work without any adjustment and obtain an effect that only a little tiredness is felt after long time work.

As described above, compared with the conventional art, in accordance with the present invention, it is possible to provide a progressive lens better suitable for desk work such as personal computer work.

In addition, although the progressive surface is described here as being one of an outer surface and an inner surface, the present invention is not limited to such a case and also includes a case where both outer and inner surfaces have a progressive aspheric element and a desired progressive addition power effect is achieved as a result of each of their properties.

## Claims

1. A progressive addition power lens comprising on at least one of a pair of refractive surfaces forming the lens:
a far portion (F) having a first dioptric power,
a near portion (N) having a second dioptric power larger than the first dioptric power, and
an intermediate corridor connecting in an almost vertical direction said near portion with said far portion and having a refractive power that decreases gradually from said near portion to said far portion,
**characterized in that** the length of the intermediate corridor is in the range of 22 to 28 mm, and a clear visual region of the lens, which is defined as a region where the astigmatism is 0.5 D or less, has a maximum horizontal width in the far portion (F), which is equal to or less than twice its minimum horizontal width in the intermediate corridor.

2. The lens according to Claim 1, wherein said clear visual region has a horizontal width of 30 mm or more in the near portion.

3. The lens according to Claims 1 or 2, wherein the position, where the astigmatism distributed at the sides of the lens has its maximum value, is located above the intermediate corridor.

4. Use of the lens according to any one of Claims 1 or 3 in a frame of glasses, wherein the eye point (EP) of the lens is located in the intermediate corridor separated by 9 to 12 mm upward from a near point (NP) in a horizontal front view, the near point being the point on a principal meridian curve (M) of the lens where the near portion (N) and the intermediate corridor meet.
